# EUROPEAN PATENT APPLICATION

(11) **EP 4 707 860 A1**
(43) Date of publication of application: **11.03.2026**
(21) Application number: 24199559.6
(22) Date of filing: 10.09.2024
(51) Int. Cl.: G01S 13/56, B60R 11/04, G01S 13/86, G01S 13/931, G06V 10/80, G06V 20/59

(54) **INSIDE CABIN SENSOR SYSTEM**

(71) Applicant: Novelic Doo Beograd - Zvezdara, 11000 Belgrade (RS)
(72) Inventor: BRANKOVI , Veselin, 11000 Belgrade (RS); MIHAJLOVIC, Veljko, 11000 Belgrade (RS); SOLOPERTO, Raffaele, 82140 Olching (DE); SIMIC, Nenad, 11000 Belgrade (RS); TASOVAC, Darko, 11000 Belgrade (RS)
(74) Representative: Dennemeyer & Associates S.A.

(57) **Abstract**

An inside cabin sensor system, having an integrated, single hardware part comprising a camera sub-system and an integrated radar sub-system is proposed. A proposed system provides related information for covering the following applications inside a vehicle: Child Presence Detection (CPD), Driver Drowsiness & Fatigue (F), Driver Distraction (DD) as a safety-relevant function, complemented by Intrusion & Proximity Alert (IPA), Seat Occupancy Detection (SOD), Face Recognition (FR), and optional applications such as Driver Emotion (ES), Passenger Classification (PC), Airbag Suppression (AS), Airbag Activation (AA), Mobile Phone Detection (MP), Gesture Detection (GD) and Vital Signs Detection (VS). A proposed system utilizes Artificial Intelligence (AI)-related data processing for data processing, using radar point cloud data, calculated by said radar sensors. The proposed system utilizes Artificial Intelligence (AI)-related data processing for data processing, using video-captured data. The proposed system utilizes Artificial Intelligence (AI)-related data processing for sensor data fusion, using radar sensor and video sensor data.

## Description

### TECHNICAL FIELD

The present disclosure refers to the inside cabin sensor system, having an integrated, single hardware part comprising a camera sub-system and an integrated radar sub-system.

A proposed system provides related information for covering the following applications inside a vehicle: Child Presence Detection (CPD), Driver Drowsiness & Fatigue (F), Driver Distraction (DD) as a safety-relevant function, complemented by Intrusion & Proximity Alert (IPA), Seat Occupancy Detection (SOD), Face Recognition (FR), and optional applications such as Driver Emotion (ES), Passenger Classification (PC), Airbag Suppression (AS), Airbag Activation (AA), Mobile Phone Detection (MP), Gesture Detection (GD), Vital Signs Detection (VS). A proposed system utilizes Artificial Intelligence (AI)-related data processing for data processing, using radar point cloud data, calculated by said radar sensors. The proposed system utilizes Artificial Intelligence (AI)-related data processing for data processing, using video-captured data. The proposed system utilizes Artificial Intelligence (AI)-related data processing for sensor data fusion, using radar sensor and video sensor data.

### STATE OF THE ART

The state of the art vehicle inside cabin sensing addresses the solutions using camera systems. A new generation of inside cabin sensors having radar-based solutions in mm-waves has been introduced recently. Both sensor families address different types of applications whose features overlap with those of seat occupancy sensing and fatigue applications. With state of the art cabin solutions, more than one camera is often used or at least one camera is used for watching at least the vehicle driver. Radar sensor introduces low-power processing with edge computing for intrusion alerts on one side, as well as for child presence detection, on the other side, where contrary to the camera, non-line of sight detection is possible. Camera solutions combined with sensors are used for applications outside of the vehicle, in different arrangements, also including sensor fusion options. The state of the art inside camera solutions are limited to camera-only sensing with one or more cameras inside vehicles, including applications like Driver Monitoring Systems (DMS) addressing Driver Distraction, driver's eye closure used for Driver Fatigue (DF), driver Face Recognition (FR) and partly Seat Occupancy (SOD), which works with limitations. Other applications may also be addressed with a camera, but the signal processing always uses hardware processing external to the camera. On the other side, applications like Child Presence Detection (CPD) and Intrusion & Proximity Alert (IPA) are introduced separately by a radar, which cannot be done by a single camera sensor, or without external signal processing requiring a lot of power.

US9834216B2**,** A vehicular control system using cameras and radar sensors introduces a vehicular control system that includes a plurality of cameras that capture image data, at least one radar sensorthat senses radar data and a control that processes image data captured by the cameras and sensed radar data, and addresses applications outside a vehicle. The control, based on processing of captured image data and/or sensed radar data, detects another vehicle and determines the distance from the equipped vehicle to the detected other vehicle.

US10721384B2**,** A camera with a radar system introduces a camera comprising an optical system configured to record images based on light entering the optical system from an optical field of view, a radar system configured to obtain radar information of targets within a radar field of view that is overlapping with the optical field of view, the radar information including one or more of a distance information indicating the distance of targets with respect to the camera, a speed information indicating the speed of targets with respect to the camera and dimension information indicating a dimension of targets, and a control unit configured to control at least one parameter of the optical system based on the obtained radar information. Applications address outside-the-vehicle sensing with different non-integrated HW entities.

US11461915B2**,** Object size estimation using camera map and/ or radar information introduces a methodology for detecting a distance for portable consumer camera usage, with a size estimation.

EP4283328A1**,** A multi-radar and camera joint calibration method, system and device, and storage medium introduces a multi-radar and camera joint calibration method, system and device, and a storage medium. Applications address outside-the-vehicle sensing with different non-integrated HW entities.

US10011229B2**,** A mirror replacement system for a vehicle introduces a mirror replacement system for a vehicle including an image capture unit, a supply unit configured to supply the image capture unit with control signals, and an image reproduction unit configured to be disposed of in the vehicle interior. At least one of the supply units and the image capture unit is configured to perform video processing of the images captured by the image capture unit. The image capture unit and the supply unit are disposed of in spaces separated from each other with respect to their sealing and are each disposed of as separated from and outside the image reproduction unit. Distributed camera units inside the vehicle are proposed.

CN107399275B**,** A vehicle occupant observation system and method introduces a vehicle occupant viewing system and a corresponding method for displaying a vehicle occupant on an image display unit. The system may include one or more vehicle interior cameras for obtaining images of occupants of one or more occupants of a rear seat of the vehicle. The system may include two vehicle interior cameras, one oriented facing forward, and the other one oriented facing rearward, which may capture occupant images of an occupant in a forward-facing position and occupant images of an occupant in a rearward-facing position (e.g., an infant in a car seat). Distributed camera units inside the vehicle are proposed.

US11975659B2**,** A vehicular camera monitoring system introduces a vehicular camera monitoring system, a driver-side camera, a driver-side video display screen disposed at a driver-side cabin region of an interior cabin of the vehicle, a passenger-side camera, and a passenger-side video display screen disposed at a passenger-side cabin region of the interior cabin of the vehicle. Distributed camera units inside the vehicle are proposed.

US20210291751A1**,** A vehicular driver monitoring system with a camera having a microlens array introduces a vehicular driver monitoring system that includes a camera having a field of view that includes at least a driver's head region within a cabin of a vehicle. The camera includes an imager having a two-dimensional array of photo-sensing elements.

US10351135B2**,** A vehicular control system using cameras and radar sensors introduces a vehicular control system that includes a plurality of cameras, at least one radar sensor, and a control having at least one processor. Captured image data and sensed radar data are provided to and processed at the control to detect objects present exteriorly of the vehicle. The control receives data relevant to the geographic location of the vehicle. The vehicular control system, based at least in part on processing at the control of at least one selected from the group consisting of (i) captured image data and (ii) captured radar data, detects another vehicle that is present exterior of the equipped vehicle. Applications address outside-the-vehicle sensing with different non-integrated HW entities.

DE102020120201A1**,** Eye detection using one or more neural networks introduces an apparatus, systems, and techniques described for determining locations of objects using images that include digital representations of those objects. In at least one embodiment, the gaze of one or more occupants of a vehicle, regardless of location, is determined by one or more sensors used to detect those occupants.

US11927954B2**,** A vehicular control system with a handover procedure for the driver of the controlled vehicle introduces a vehicular control system that includes a forward-viewing camera, a forward-sensing sensor, and an in-cabin-sensing sensor. With the system controlling the driving of the vehicle, the system determines a triggering event that triggers handing over the driving of the vehicle to a driver of the vehicle before the vehicle encounters an event point associated with the triggering event. The vehicular control system (i) determines the total action time available before the vehicle encounters the event point, (ii) estimates a driver takeover time for the driver to take over control of the vehicle and (iii) estimates a handling time for the driver to control the vehicle to avoid encountering the event point. Applications address the outside and inside the vehicle sensing with different non-integrated HW entities.

US11810443B2**,** A vehicle-occupant alert system introduces a vehicle-occupancy alert system. The system includes a controller circuit configured to receive occupant data from an occupancy-monitoring sensor configured to detect the presence of one or more objects inside a vehicle. The controller circuit is also configured to determine whether an operator of the vehicle has exited the vehicle based on the occupant data. The system can improve passenger safety by alerting the vehicle operatorthat a child remains in the vehicle unattended before the operator moves away from the vehicle.

US11733370B2**,** A building radar-camera surveillance system introduces a building radar-camera system that includes a camera configured to capture one or more images, the one or more images including first locations within the one or more images of one or more points on a world-plane and a radar system configured to capture radar data indicating second locations on the world-plane of the one or more points.

US 9862271B2**,** the mm-Wave seat occupation radar sensor introduces seat occupation applications, the Child Presence Detection using radar sensing for an inside vehicle cabin.

US 9865150B2**,** the mm-Wave radar driver fatigue sensor apparatus introduces vital signs processing, captured by radar sensing, for detection of driver fatigue.

US 10159435B1**,** the Emotion Sensor System introduces the vital signs processing, captured by radar sensing, for detection of the passenger's emotional status.

### SUMMARY

The basic motivation for the invention is to provide a new generation of the vehicle inside cabin sensor system, having an integrated, single hardware part comprising of a camera sub-system and an integrated radar sub-system. The proposed system provides related information used to cover the following applications inside a vehicle: Child Presence Detection (CPD), Driver Drowsiness & Fatigue (F), Driver Distraction (DD) as a safety-relevant function, complemented by Intrusion & Proximity Alert (IPA), Seat Occupancy Detection (SOD), Face Recognition (F), and optional applications like Driver Emotion (DE), Passenger Classification (PC), Airbag Suppression (AS), Airbag Activation (AA), Gesture (G). A proposed system utilizes Al methodology for data processing, using radar point cloud data, calculated by said radar sensors. The proposed system utilizes AI methodology for data processing, usingvideo-captured data. The proposed system utilizes Al methodology for sensor data fusion, using radar sensor data and video sensor data.

The proposed innovative inside cabin solution shows a vehicle sensor system with a single hardware, having an integrated radar and camera sensor in said hardware, providing sets of different inside cabin applications through said system, in an affordable way, with a small system cost, compared to the state of the art. The new features are introduced through the integration of sensors, where camera sensing results and radar sensor sensing data can be advantageously fused. The new features are introduced, where camera sensing results and radar sensor sensing data on passenger classification can be advantageously fused, to ensure a sufficiently large probability of the proper passenger classification to trigger airbag suppression and airbag activation, with related activation speed. The new features are introduced, where camera sensing results and radar sensor sensing data on passenger classification can be advantageously fused, to ensure a sufficiently large probability of the proper passenger classification to trigger airbag suppression and airbag activation, with related activation speed, wherein pressure sensors, integrated in seats, used for passenger classification, can be omitted.

### BRIEF DESCRIPTION OF THE DRAWINGS

Fig. 1a-b State of the art inside cabin camera sensor and radar sensor application scenario.
Fig. 2a-b Proposed application scenario for introduced system, addressing inside vehicle sensing.
Fig. 3 Structure of the proposed system apparatus details.
Fig. 4 Proposed system co-processing unit realization options.
Fig. 5a-c Sub-system functional structure of the proposed co-processing unit.
Fig. 6a-b Child Presence Detection (CPD) application scenario.
Fig. 7 Seat Occupancy Detection (SOD) application scenario.
Fig. 8 Intrusion & Proximity Alert (IPA) application scenario.
Fig. 9 Vital Sign Detection (VS) & Fatigue (F) & Emotion Sensing (ES) application scenario.
Fig. 10 Mobile Phone Detection (MP) application scenario.
Fig. 11 Gesture Sensor (GS) application scenario.
Fig. 12a-c Video sensor-related Fatigue (F) & Face Recognition (FR) & Distraction (DI) application scenario.
Fig. 13 Seat Belt (SB) application scenario.
Fig. 14 Proposed HW apparatus realization options.
Fig. 15a-b Omitting seat pressure sensors application scenario by using proposed system.

### DETAILED DESCRIPTION OF THE INVENTION

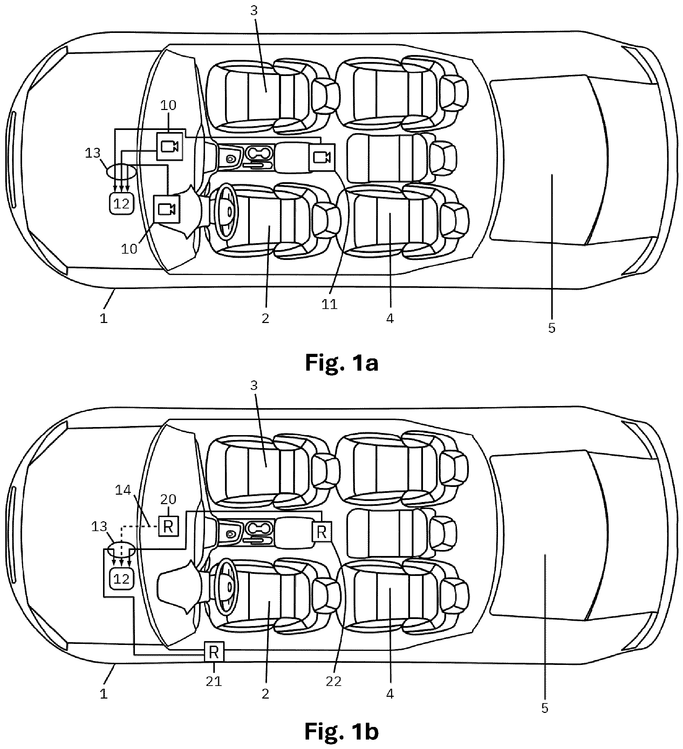

Fig. 1 shows vehicle 1 arrangement of state of the art inside cabin sensing. Fig. 1a shows the arrangement with an inside camera 10, wherein cameras 10 are so positioned to look directly at the driver, from the position in the wheel, or to look at the driver from the position above the wheel in the direction of the driver, providingthat Driver MonitoringSystem (DMS) is based on camera sensor. This arrangement can be enhanced or exchanged by having camera 10 in the middle of the vehicle, in a high position overlooking the cabin, sometimes placed at the overhead compartment position. The second said camera 10 can combine DMS with occupation monitoring. Sometimes vehicle 1 rear-end camera 11 is introduced, facing the back seat, and giving more information, but increasing the monitoring system complexity and system cost. Camera(s) 10 and 11 are connected over a cable interface 13 to the processing unit 12, which can be a separate processing unit or part of the infotainment vehicle system processing, being integrated into vehicle 1 body. Front seats 2 and 3, block the view of back seats 4, meaning that the probability of the seat occupation and classification of the passengers is smaller in cases when the front seats are occupied by larger persons, and camera 11 does not exist. Cameras 10 and 11 are suffering from light conditions, and they cannot or can hardly detect if a child is on the footwell between front seat 3 and back seat 4 or between front seat 2 and back seat 4, especially when camera 11 is not present, due to system cost savings. As shown in Fig. 1b, a new cabin monitoring system based on radar sensors 20 has been introduced recently. Radar sensor 20 is positioned preferably at the same place where camera 10 is positioned when observing the cabin in the middle of vehicle 1 at a higher position, but they are also positioned in the middle of the rooftop of vehicle 1 or on one side of vehicle 1. State of the art radar system 20 for applications like Child Presence Detection (CPD) and Intrusion and Proximity Alert (IPA) can do all the processing on the edge, meaning on the sensor module itself, and do not need necessarily to do any processing on the remote processing unit 12, but cable connection 13 may exist for radar sensing applications related to vital sign detection, like Driver Fatigue (DF), Emotion Sensing (ES). Seat Occupancy Detection (SOD) can be calculated within the module of the radar sensor 20 (edge computing) or can be executed on the remote processing unit 12. The major difference between camera sensor 10 and radar sensor 20 is that radar sensor 20 can detect humans and babies, without necessarily having light of sight direct visual contact, meaning that radar sensor 20 can detect a baby sleeping in the footwell behind seat 3. Radar sensor 20 can detect in particular the cases of a baby in the vehicle 1 rear luggage area 5. Both radar sensor 20 and camera sensor 10 are able, with different methodologies and with different art of constraints, to detect vital signs, fatigue, and emotion of the driver, as well as seat occupation and classification of the passenger at the back seats. All detection events by both sensors have a variable probability of detection and classification, which is insufficient to trigger decisions related to airbag operations.

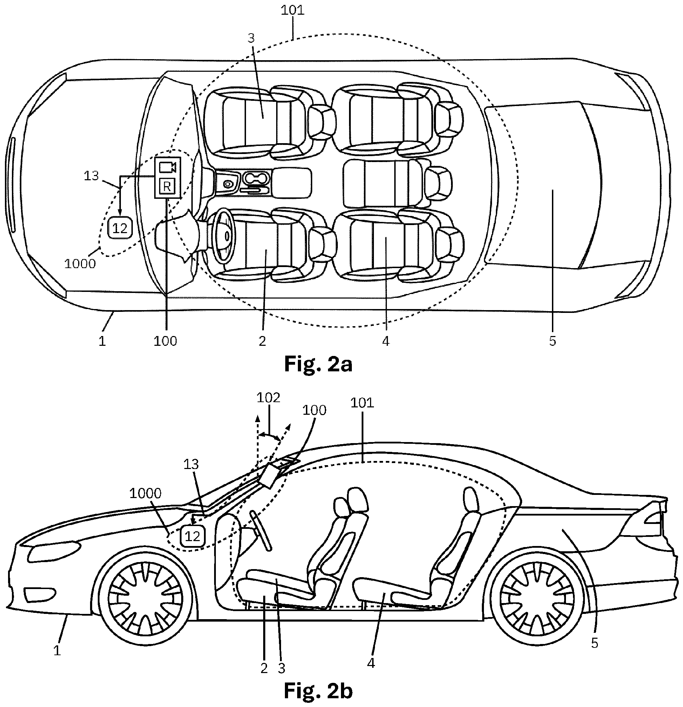

Fig. 2a) and Fig. 2b) introduce and describe the proposed system 1000. The proposed system 1000 has an HW apparatus 100 with a camera sensor and radar sensor in one single HW unit being connected to the remote processor unit 12, which is part of the system. In contrast to the state of the art, where both sensor systems are used in vehicle 1, the proposed system has inherently smaller system cost, smaller installation cost, and has all application features like a separate sensor itself, but because specific applications can be reached out and sensed by both camera sensor and radar sensor, different artificial intelligence (AI) methodologies and sensor fusion methodologies can be applied to have better detectivity of the specific applications. In particular, the detection of driver fatigue, driver emotions, airbag suppression, and airbag explosion speed, related to the passenger classification by using two systems jointly, may lead to better detection probability compared to the case in which a camera sensor or radar sensor is used alone. As shown in Fig. 2b, said hardware apparatus 100 is positioned close to the middle of said vehicle 1, in the higher position, being close to the back mirror, integrated into the back mirror, or integrated into the overhead compartment. Said HW apparatus 100 has an inclination angle 102 to the vertical position larger than zero degrees, to have optimum observation area 101 of vehicle 1. Connection cable 13 is serving advantageously for video data transfer, where all radar data are processed on said HW apparatus 100. Said HW apparatus has anyway a low data rate digital interface, advantageously run by the CAN family of protocols. Optionally two high-speed digital interfaces and a low-speed interface are available on said HW apparatus 100, advantageously LVDS interface for video, automotive ethernet for radar point cloud data, and CAN interfaces are applied.

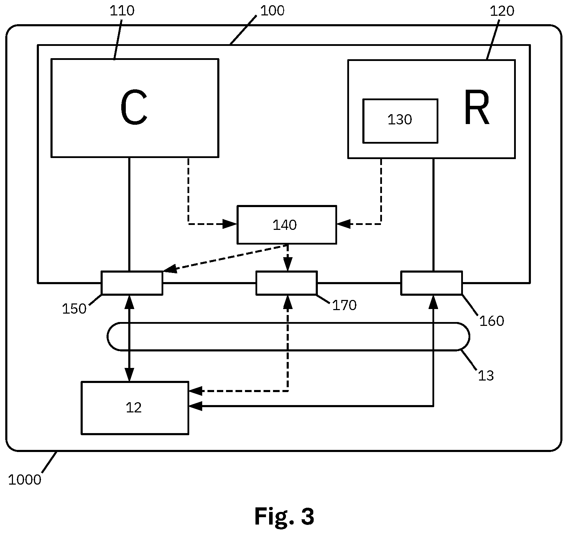

Fig. 3 shows the functional parts of the proposed system 1000. The proposed system 1000 has a co-shared processing unit 12 performing processing of the data and said HW apparatus 100. A hardware apparatus 100 has a camera sensor functionality 110, and a radar sensor functionality 120, being integrated in the same said hardware apparatus 100. Said Camera functionality 110 is realized by the plurality of the realization options, where the arbitrary part of the chip sensors being realized using arbitrary semiconductor technologies, is accompanied by arbitrary optical lenses, providing digital data to a high-speed digital interface 150, where connection solution 13 is used to provide a connection to said co-shared processor unit 12. Advantageously, data is transmitted using coaxial cable or optical cable with specific high-speed communication solutions: like Low Voltage Differential Signaling (LVDS) or MIPI CSI-2. Each of said communication solutions requires that the related pre-processing of the data before sensing should be performed in the said camera entity 110, and complementary processing data on said co-shared processor 12, before actual data processing on said co-shared processor 12 is performed. Advantageously, captured video information passes through arbitrary optical lenses to the video capture chip, having CSI interface, providing data to the serializer, typically from the GMSL family, going over the LVDS to said co-processing unit 12, having de-serializer, from the same GMSL family, and then approaching data processing. Physical connection line 13 may advantageously also provide DC supply or controlling I2C interface, with separate connecting lines being attached to the main LVDS cable.

Said HW apparatus 100 can have a single power management IC (PMIC) for both said camera sensor functionality 110 and said radar sensor functionality 120. Said radar sensor functionality 120 has edge processing functionality 130, which allows radar sensor processing when vehicle 1 engine is off and when the co-shared processor 12 is not working. This is necessary for performing radar sensor processing for the applications related to Child Presence Detection (CPD) and Intrusion & Proximity Alert (IPA), which are the applications executed when vehicle 1 is not moving and vehicle 1 engine is off. In this particular application case, when the engine is off, the radar sensor functionality 120 sends calculated sensor results over said HW apparatus 100 to low-speed digital interface 160. A low-speed digital interface is defined as an interface having less than 10Mbt/s transmission, and it is advantageously realized by a common CAN interface & protocol family. Information from radar sensor functionality 120 is not reaching co-shared processor 12, which is off, it is reaching other low-power controller processors of said vehicle 1, being active when the engine is off. Those low-power controllers are then initializing vehicle 1 alert related to predefined actions and sending wireless alarms. One realization option of said HW apparatus includes merging of radar-point cloud data, generated in the radar sensor functionality 120, with video data generated in video sensor functionality 110, in optional high-data rate merging functionality 140 and sending those data to the said HW apparatus 100, digital interface 170, and further to co-shared processor 12, over the cable structure 13. Alternatively, instead of digital interface 170, and digital interface 150, a high-speed LVDS connection can be used advantageously. Said HW apparatus 100 has a high data rate digital interface 150, and low data rate speed interface 160, advantageously respectively realized by LVDS or MIPI on one side and CAN solutions on the other side, wherein additional high-speed digital interfaces like automotive Ethernet and low controlling digital interfaces like I2C and LIN can be optionally added.

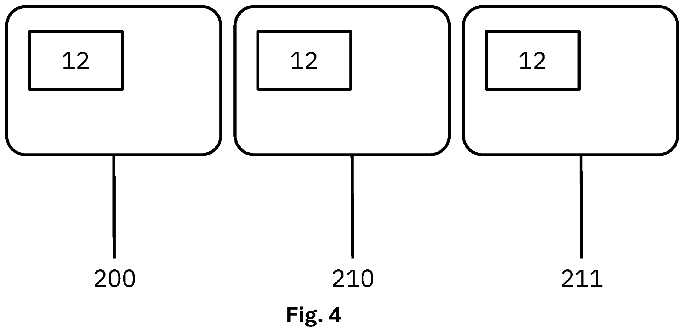

Fig. 4 outlines said co-shared processing unit 12 realization options. Said co-shared processing unit 12, can be part of the central autonomous driving system (ADAS) processor unit 200, which performs autonomous driving-related information, using sensor fusion information of camera and radar sensor assembled auxiliary to said vehicle 1, outside of said vehicle 1 cabin, observing area outside of said vehicle 1. If said vehicle 1 has such an expensive, and high complexity processor unit 200, being used forADAS, co-processor unit 12 can be, defined as a processing and memory resource of the central autonomous driving system (ADAS) processor unit 200, also using hardwired accelerators and possible parallel computing HW infrastructure of the central autonomous driving system (ADAS) processor unit 200. Said co-shared processing unit 12, can be part of vehicle1 infotainment processor system, processor unit 210, advantageously positioned in said vehicle 1 infotainment & cluster area, on the dashboard of vehicle 1. Said co-shared processing unit 12 can be a separate processor system 211, being positioned in said vehicle 1, performing, as a main purpose, inside cabin relevant radar and video sensor data processing.

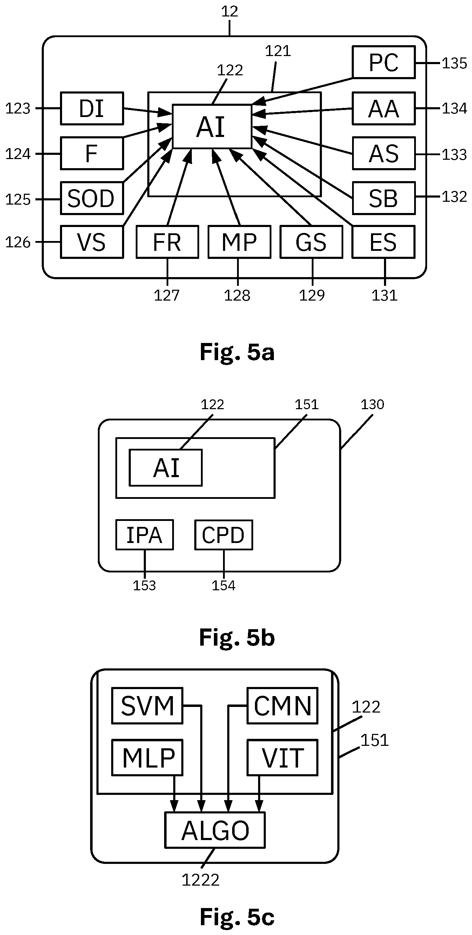

Fig. 5a shows the functional structure of said co-shared processing unit 12, processing applications, having processing and memory handling part 121, where artificial intelligence (AI) processing entity 122 is working. Artificial intelligence (AI) processing entity 122 is processing video and radar sensor data, fulfilling more than one relevant application for vehicle 1: Driver Distraction (DI) application 123, Driver Fatigue & Drowsiness (F) application 124, Seat Occupancy Detection application (SOD) 125, Vital Sign Detection application (VS) 126, Face Recognition application (FR) 127, Mobile Phone Detection (MP) application 128, Gesture Sensing (GS) application 129, Emotion Sensing (ES) application 131, Seat Belt Detection (SB) application 132, Airbag Suppression (AS) 133 application, Airbag Activation (AA) application 134 and Passenger Classification (PC) 135. Said processing and memory handling part 121 has a memory part that can be used for memorizing, over time, dedicated said applications' results from the past, as input for application calculation of the present time or real time. Advantageously, application (VS) 126 captures vital signs data over time, which may be used for profiling the vital signs status of the driver, the deviations of which, in real time, can be used by applications (F) 124 to calculate fatigue of the driver and/ or by applications (ES) 131 to calculate the emotional status of the driver, e.g., a driver is more excited than on average or less excited than an average. Application (SOD) 125 can use video information processing and radar sensor processing, fuse that information, and increase the probability of the detection related to seat occupancy, within said vehicle 1. Passenger Classification (PC) 135 application can use video information processing and radar sensor processing, fuse that information, and increase the probability of the passenger classification, which may be then large enough to trigger detection related to a seat occupancy classification, within said vehicle 1. Application Passenger Classification (PC) 135 can differentiate a child and a baby from an adult and can be advantageously used within the Airbag Suppression application (AS) 133 and Airbag Activation application (AA) 134, where airbag does not activate in case of a baby on the seat or, respectively, an airbag is activated with specific blowing speed, which is different for children and different for adults on a seat 4. The probability of the proper human classification on the seat in the case of camera and radar sensor fusion is higher than the probability of the proper classification by a radar sensor only, or camera sensor only. Advantageously, proposed system 1000 serves application (AS) 133 and application (AA) 134 in the way that no other information is needed from a third sensor, explicitly in the way that the pressure sensors in the back seats 4 of vehicle 1 can be omitted. This feature of the proposed system 1000 enables significant system cost savings for said vehicle 1.

Fig. 5b shows a functional structure of said digital processing unit 151 being part of the said radar sensor functionality 120. Artificial intelligence block (AI) 122 is conducting calculations of the application Child Presence Detection (CPD) 154 and Intrusion & Proximity applications (IPA) 153. The application Child Presence Detection (CPD) 154 detects a child being left alone, without an adult in said vehicle 1, within 10 seconds after said vehicle 1 engine is off, 10 minutes after the 3-6yo child has gained access to the vehicle (EuroNCAP scenario 3 standard latency), and up to 20 minutes if some warnings are triggered and delayed.

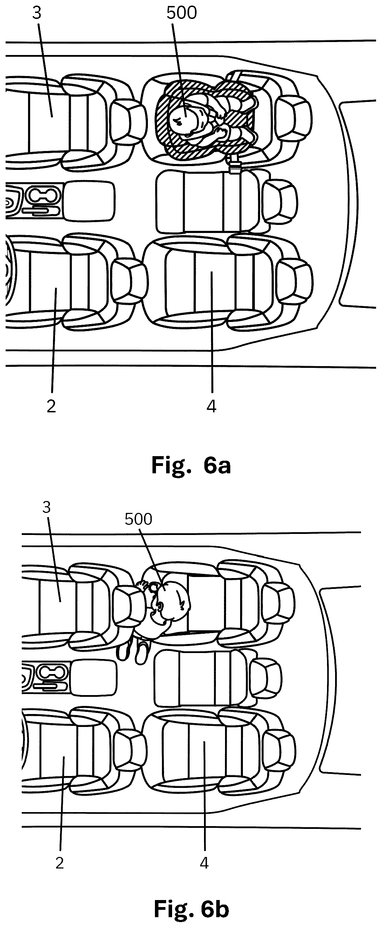

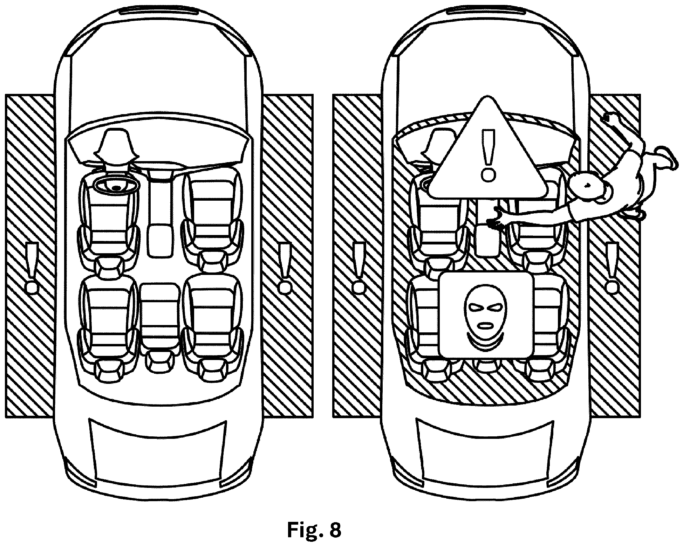

Application Child Presence Detection (CPD) 154 detects a child in any position inside said vehicle 1, also in those positions, where line of sight connection from said HW apparatus 100 toward child 500 exists. Related CPD 154 application scenario is described in Fig. 6. The application Intrusion & Proximity Alert (IPA) 153 detects if a person is entering the proximity area, which may be also defined as a protection zone around the vehicle doors and situation when a dedicated person, or dedicated person's body, or specific object is entering into said observation area 101, of said vehicle 1. The related IPA 153 application scenario is described in Fig. 8. Both IPA 153 and CPD 154 applications are executed and processed on said radar functionality 130, meaning that they are active when an engine of said vehicle 1 is off. Said Artificial Intelligence (AI) 122 functionality is incorporated in said co-shared processor 12 and is also incorporated in said radar sensor functionality 130, as shown in Fig. 5c, with a processor 151. Said Artificial Intelligence (AI) 122 functionality has 4 algorithm functionalities: Support Vector Machines (SVM) with decision trees, Multilayer Perception (MLP), Convolutional Neural Network (CNN), and Vision Transformer (ViT), being applied to a video data information or a radar data information, or simultaneously on both said radar information data and said video information, wherein said radar information data is said radar point cloud data, and said video information data is data coming to said co-shared processing unit 12, over entity 13. Said Artificial Intelligence (AI) 122 functionality is attached to algorithm entity 1222, in both cases when said Artificial Intelligence (AI) 122 functionality is in said co-shared processor 12 or in said radar sensor functionality 130. Said algorithm entity 1222 is a dependent or predefined or triggered application, engaging at least two of said 4 algorithm functionalities: Support Vector Machines (SVM) with decision trees, Multilayer Perception (MLP), Convolutional Neural Network (CNN), and Vision Transformer (ViT). The engaging of at least two of said 4 algorithm functionalities, by said algorithm entity 1222, is always conducted to ensure minimum computation and memory resources of the co-shared processing unit 12 or processor in said radar functionality 130, but sufficient to execute the particular said perception applications 123 to 129 and 131 to 135. The engaging of at least two of said 4 algorithm functionalities, by said algorithm entity 1222, is always conducted to ensure minimum power consumption of the co-shared processing unit 12 or processor in said radar functionality 130, for the particular said perception applications 123 to 129 and 131 to 135, which is essentially important for said applications IPA 153 and CPD 154, which are executed on said radar sensor functionality 130, when the engine of vehicle 1 is off.

Fig. 6a and Fig. 6b show application scenarios related to said application Child Presence Detection (CPD) 154. Child 500 is in a child seat on one of the rear seats of said vehicle 1, wherein said Child 500 can be also a baby, of less than 2 years of age. A child 500 is in the footwell behind front seat 2 or front seat 3 of said vehicle 1. In both cases shown in Fig. 6a and Fig. 6b, a camera sensor only, within the radar sensor being placed in the front part of vehicle 1, cannot detect baby 500, and a radar sensor needs to be used. Detection of the child is done within 10 seconds, when said vehicle 1 engine is off. The procedure of child detection includes said Artificial Intelligence (AI) 122 operation, which includes vital signs analysis being extracted from a complete said observation area 101 of vehicle 1.

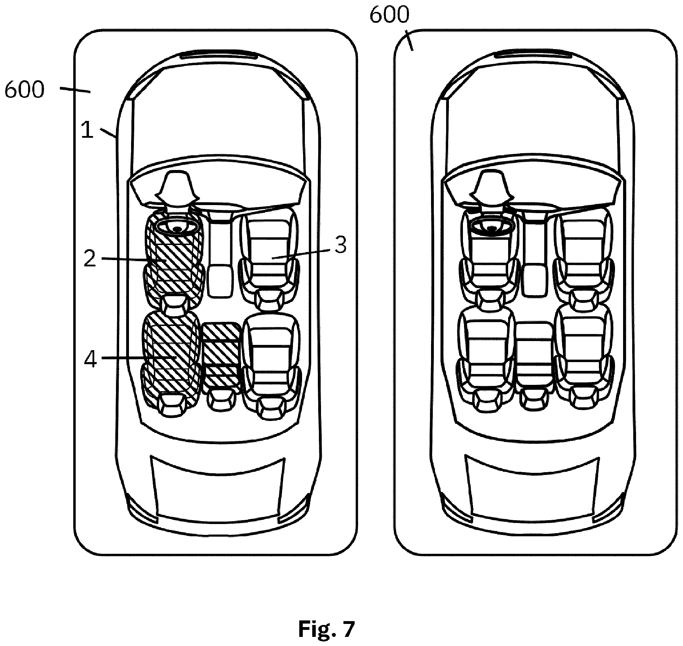

Fig 7. shows a human-machine interface realization option outlining the operation result of the said Seat Occupancy (SOD) application 125. Display 600 of vehicle 1 shows two possible results of said seat occupation (SOD) application 125, or the left side said application 125 is calculating that the seat 2, the seat 4 and middle back seat of the vehicle 1 are occupied, on the right side seats are not occupied. Using said Artificial Intelligence (AI) 122 operation, the proposed system 1000 detects seat occupancy only if a human is on the seat, and it avoids detecting seat occupancy if only an object, having weight or no significant weight, is on the seat of vehicle 1. This is a feature of significant advantage and comfort, against the pressure sensor, being integrated into vehicle 1 seat. In many use cases of vehicle 1, an object of a certain weight, e.g., a medium heavy bag on a co/driver seat, may cause sound activation of seat belt reminder, where pressure sensor is detecting weight, assuming that the human being is on the seat, which is not the case.

Fig 8. shows a realization option of the operation result presentation of said Intrusion & Proximity Alert (IPA) application 153. The security detection zone is shown on the left side of th figure Fig 8, more precisely in front of the left side of vehicle and in front of right side of vehicle 1, which is monitored by said HW apparatus 100, using said radar sensing function 130. Said radar sensing function 130 works in a low-power operation mode, when said vehicle 1 engine is off, or is not moving. Said proposed system 1000 can detect moving objects in the security detection zone and provide related alerts to said vehicle 1. Said vehicle 1, in case of said alert detection, can block or close vehicle 1 door, or trigger activation of auxiliary cameras to observe the situation and record possible events around vehicle 1. On the right side of Fig. 8, proposed system 1000 detects if an unidentified object is entering the area inside vehicle 1, where the unidentified object can be part of a human body or a complete human body of a person, intending to take away something from the inside area of vehicle 1, or intending to enter inside vehicle 1 area. Said unidentified object can be part of a broken door glass of said vehicle 1. In the case of said intrusion detection, said vehicle 1 can send an alert by wireless means to the area outside of said vehicle 1, block the engine of vehicle 1, initialize activation of said inside camera sensor, being part of the proposed system 1000, or initialize other art of actions, or combine outlined actions. Advantageously, said Intrusion & Proximity Alert (IPA) application 153 of the proposed system is replacing an ultrasound-based intrusion alert sensor, used as a state of the art sensing solution for intrusion detection.

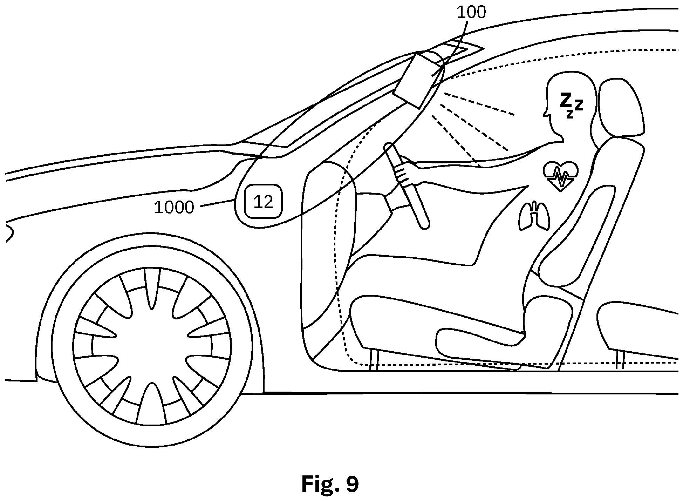

Fig. 9 shows the application scenario, where said inside cabin sensor system 1000 is observing a person on the seat, i.e., the driver of vehicle 1. Said application scenario of Fig. 9 introduces said applications: Driver Drowsiness & Fatigue (F) 124, Driver Emotion (ES) 131, Vital Signs Detection (VS) 126, and Passenger Classification (PC) 135, wherein the same applications can be applied to the persons in other seats of vehicle 1. Said inside cabin sensor system 1000 detects Vital Signs (VS) 126 of the person in vehicle 1, using one of two or combined means of said radar functionality 130 and camera functionality 110 sensors of the said hardware apparatus 100. In the first case, emitted radar signals are in mm-waves radio frequency rage, preferably in 60 GHz frequency band or 120 GHz band, are sent toward a human body, and reflected to said radar functionalities 130, being modulated by micromovement of a person under observation, caused by breathing and heart beats. In the second case, said camera sensor 110 detects movement and displacement of the pixels from the passenger's face being related to the micromovement of the person under observation, caused by breathing and heart beats. In combined or fused approach, said camera sensor 110 is detecting a vital signs information, which is processed together with said radar sensor 120 detected vital signs information, to get a new value for vital signs, wherein said processing can be the arithmetic treatment of those values obtained from two different sensors. Depending on the accuracy level and confidence detection level of both said radar sensor parts 120 and camera sensor part 110 a new fused vital signs detected data have more accuracy and more confidence. Said processing can be omitting data from one of said sensor parts 120 or 110 or averaging data from said sensor parts 120 or 130. When said application Vital Signs Detection (VS) is calculated, by said arithmetic means coming from said radar sensor parts 130 and camera sensor part 120, those data are communicated to the vehicle 1 central computing unit for the related decision-making process, or they are stored in the memory, which is within said proposed system 1000 or outside of said proposed system 1000 in said vehicle 1, or outside of said proposed system 1000 and outside of said vehicle 1, wherein in that case advantageously the cloud-based memory is used, where said vehicle 1 is transferring vital signs data by arbitrary wireless means to said cloud-based memory. Said Vital Sign data can be displayed to the driver or passenger of said vehicle 1. Said stored vital signs data of the said passengers, can be used for the following: vital signs profiling of said passenger with specific statistical spread, for changing of the said vital signs statistical spread, over specific time as well as for a dynamic observation of said vital signs changes and a dynamic observation of said vital signs speed of changes. Said dynamic observation of said vital signs changes and a dynamic observation of said vital signs speed of changes are used to support said applications Driver Drowsiness & Fatigue (F) 124, Driver Emotion (ES) 131 and can contribute to the application Passenger Classification (PC) 135. In the case of said applications Driver Drowsiness & Fatigue (F) 124, said proposed system 1000 may detect a tendency to fatigue or drowsiness, if, for example, an average breathing frequency of a driver drops by specific pre-defined percent over his profiled average breathing frequency, and can be used to trigger or to combine other calculation methodologies for said applications Drowsiness & Fatigue (F) 124, like eyes closure of said driver. In the case of Driver motion (ES) 131 application, if an average heart beat frequency increases over a profiled average heart beat frequency of said driver, over the specific pre-defined time, there is an indication of the emotional stress of said driver or possible health-related problem of said driver. In the case of Passenger Classification (PC) 135, if breathing frequency is above a specific value, that passenger can be detected as a child or a baby. Advantageously, if a breathing frequency is 20 in a minute, we may have the detection of the baby and the contribution to said Child Presence Detection (CPD) 154 application.

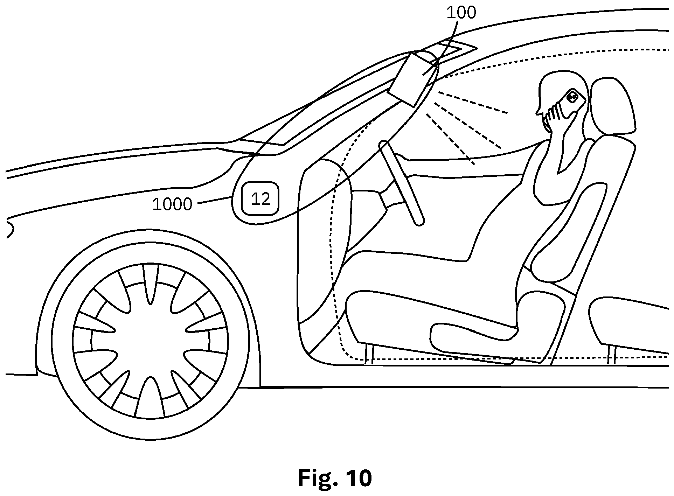

Fig. 10 shows said Mobile Phone Detection application (MP) 128. Said proposed system 1000 detects hand usage of a mobile phone by a person in vehicle 1, using the first or second or combined means of said radar functionalities 120 and camera functionality 110 sensor of said hardware apparatus 100. Both said sensor functionalities 110 and 120 can detect a case of mobile phone usage by using said Artificial Intelligence (AI) functionality 122. In the case of both said sensors 110 and 120 usage, said AI functionality 122 is trained with the persons with mobile phones attached to the head and with same persons without having mobile phone close to their heads. The quality of detection, expressed in the percentage of correct detection of the phone usage, is dependent on the system training quality, where a large sample of people used in training is providing better said (AI) 122 detection quality of both said sensor functionalities 110 and 120. A combined event detection or sensor fusion using said camera sensor 110 and said radar sensor 120 is advantageously performed by joint processing. Said processing can omit data from one of said sensor parts 110 or 120 or averaging data from said sensor parts 110 or 120. The results of detection using said application (MP) 128 can be displayed to the driver or passenger of said vehicle 1 or sent to said vehicle 1 processing system to initiate specific actions. Said specific actions can be audio or display alarm toward a driver using a mobile phone.

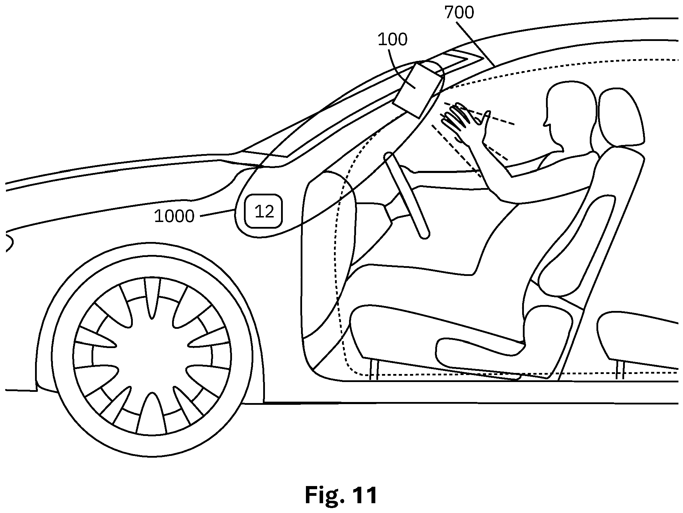

Fig. 11 shows said Gesture Sensing application (GS) 129. Said proposed system 1000 detects the gesture being caused by the part of the passenger's human body, preferably by hand. Said detection can be performed using the first of second, or combined means of said radar functionality 120 and camera functionality 110 sensors of the said hardware apparatus 100. Both said sensor functionalities 110 and 120 can detect a case of gesture. This is done by using dynamics of change of a position related to said part of the passenger's human body and change of position related to said part of the passenger's human body, in the predefined acquisition time. Said dynamics of change includes evaluation of speed when said part of the passenger's human body is changing his positions. A combined event detection or sensor fusion using said camera sensor 110 and said radar sensor 120, is advantageously performed by joint processing, when a probability of correct gesture detection is increased, compared to the case in which each said sensor functionalities 120 and 110, of said HW apparatus, are used separately. Advantageously, simple gestures by a driver's hand are used, e.g., for opening a roof, controlling openings of windows, or switching on-off of predefined appliances, by predefined simple gestures. The proposed Gesture Sensing application (GS) 129 being executed by the proposed said system 1000 advantageously reduces vehicle 1 system cost, by omitting the Time of Flight (ToF) type of sensors used for gesture control inside a vehicle.

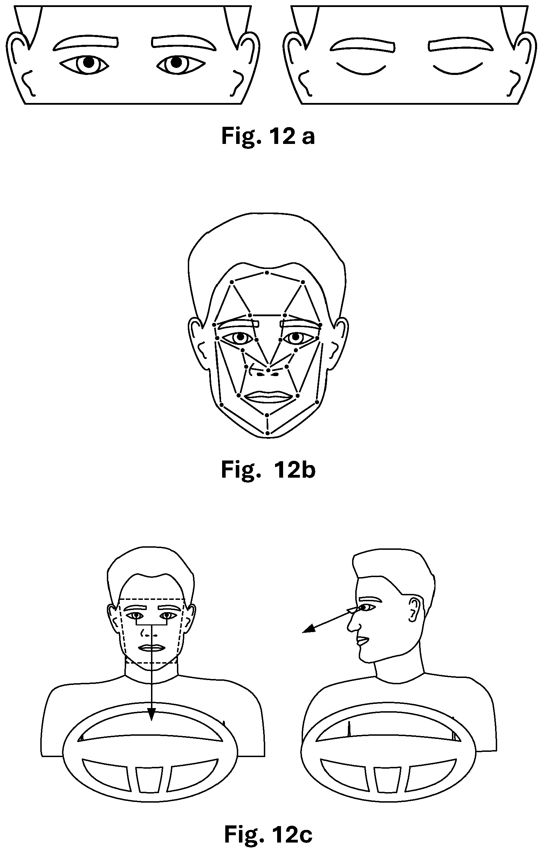

Fig. 12 shows applications scenarios for applications: Drive Fatigue & Drowsiness (F) 124, Face Recognition (FR) 127 and Driver Distractions (DI) 123. For said application Driver Fatigue & Drowsiness (F) 124, said camera sensor 110, being part of said system 1000 is used to detect if the eyes of a driver are closed, for a specific time duration and for a specific frequency of repetition, which indicates detection of fatigue or drowsiness, as presented in Fig. 12a. Said Artificial Intelligence (AI) functionality 122 is advantageously used for applications 124. For said application Face Recognition (FR) 127, said camera sensor 110, being part of said system 1000, is used to detect, if the parameters of a driver's face match the pre-stored parameters of a person, or of persons, being in charge of driving said vehicle 1, as presented in Fig. 12b. Said parameters are a set of specific pre-defined captured video constellations, sufficiently small in number to characterize a person's face, with a high probability of unique calculation of a face dynamic to exclude Face Recognition (FR) 127, with a single picture of the driver. Said Artificial Intelligence (AI) functionality 122 is advantageously used for applications 127. For said application Driver Distractions (DI) 123, said camera sensor 110, being part of said system 1000 is used to detect if the driver is looking toward vehicle 1, in a forward movement, as shown in Fig. 12c. Basic application feature is the detection of driver head orientation, where distraction is calculated, when specific pre-defined orientation angles in azimuth and elevation head positions are achieved, and kept for the specific pre-defined time-period. Said Artificial Intelligence (AI) functionality 122 is advantageously used for applications 123.

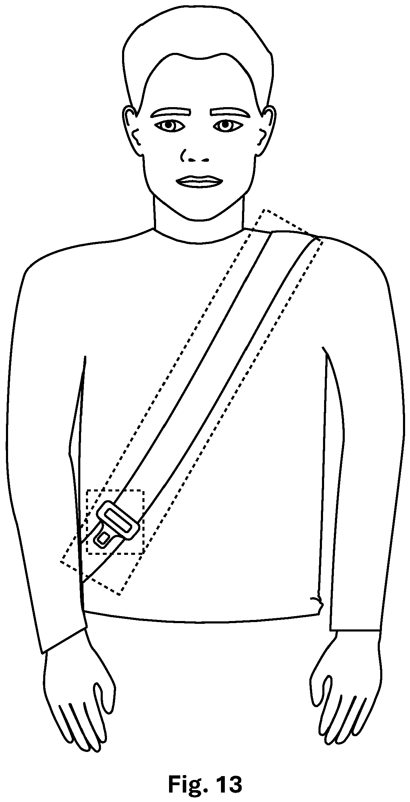

Fig. 13 shows the application scenario for safety belt reminder application 132. Said camera functionality 120 is processing video information of the passenger in a seat. Said camera functionality 110 detects the belt line as an object on the passenger's body. Said radar functionality 120 processes radar information of the passenger in the seat, when the safety belt has integrated at least one miniature radar reflector, in the used safety belt material, wherein said miniature radar reflector has conductive coating. In that case, the said radar functionality 120 is getting more specific art of the reflection form the passenger with reflector integrated in a safety belt, compared to the case of passenger without the reflector with integrated in a safety belt. Said Artificial Intelligence (AI) functionality 122 is advantageously used for applications 132.

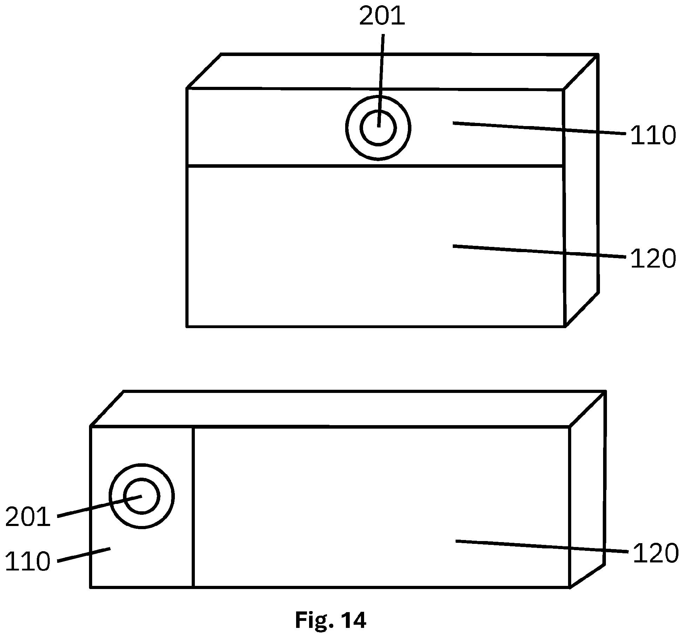

Fig. 14 shows the possible realization structure of said HW apparatus 100, being part of the proposed said Inside Cabin Sensor System 1000. Said camera sensor functionality 110 is mechanically positioned above said radar sensor functionality 120, in one of two advantageously proposed hardware apparatus 100 arrangements. Said camera sensor functionality 110 is mechanically on one side of the above said radar sensor functionality 120, in the second of two advantageously proposed hardware apparatus 100 arrangements. Said camera sensor functionality 110 has an optical functionality 201, being realized by the plurality of realization options.

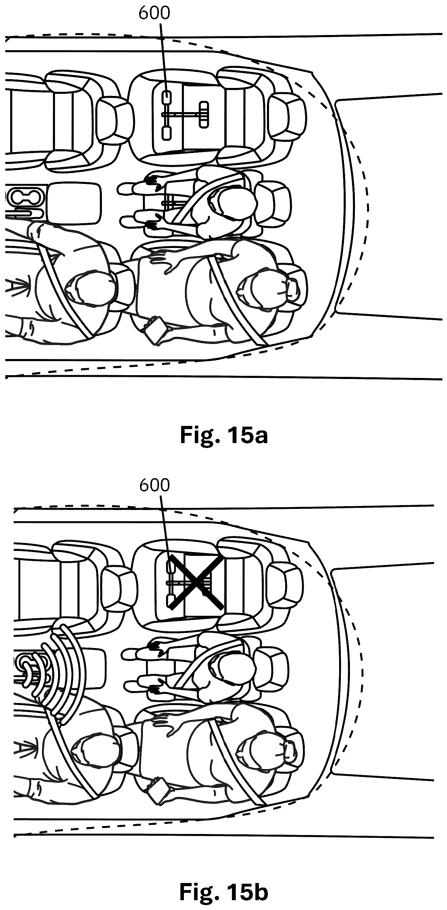

Fig. 15 shows the application scenario related to applications: Airbag Suppression (AS) 133 application, Airbag Activation (AA) application 134 and Passenger Classification (PC) 135, where said camera sensor functionality 110 and said radar sensor functionality 120 is used. In the state of the art applications, pressure sensor 600, being integrated into passenger seats, is used for passenger classification and when this combined sensor information fusion information is used for performing activation and suppression of an airbag. A pressure sensor 600 measures the weight and the distribution of the weight in the seats and uses that information for airbag control. Both said camera sensor functionality 110 and said radar sensor functionality 120 are able, using data processing driven by said Artificial Intelligence (AI) functionality 122, to perform seat occupancy detection and classification of passengers on rear seats, with a specific proper detection probability. Detection information obtained from said camera sensor functionality 110 and said radar sensor functionality 120 is advantageously fused to increase the detection probability of passenger classification, being large enough to trigger the control of the airbag. By using this approach, said pressure sensor can be advantageously omitted, as shown in Fig. 15b. This brings significant cost savings in the inside cabin overall sensor system cost, in the value of the three pressure sensors, proposed said system 1000 is advantageously used, for cost saving measured combined with new applications and features.

In special cases, in order to minimize the cost of the said HW apparatus 100, a complete signal processing for all said system applications are executed on said co-shared processing unit 12, external to said HW apparatus 100, having minimum processing requirements, with a minimum HW cost, wherein said co-shared processing unit 12 can act in low power mode, also when the engine is off. Said HW apparatus 100, can have at least one wireless connectivity means, enabling communication with a vehicle 1 telematic device communicating than with a mobile wireless network, or to directly communicate with mobile wireless networks. Said mobile wireless network are publicly used external to vehicle wireless networks, like mobile communication networks on NG level, where N can be 3, 4, 5, 6G mobile network or future broadband mobile communication networks. External to vehicle wireless networks can be public WiFi networks with a short rangy typically working in 2.4 GHz band and 5 GHz band or low throughput long distance private network working in frequency ranges lowerthan 1GHz. Said communication with a vehicle 1 telematic device can be realized as a short-range wireless communication system, with ranges typically smaller than 50 meters, advantages less than 10m, and using current technology as WiFI or Bluetooth systems. Said HW apparatus 100 can advantageously contain inertial sensor, realized by plurality of technologies, which enable information about vehicle dynamics, speed, acceleration in vector information. This may be used to quantify information of the driver behavior and to compare it with pre-defined data or historical average driver behavior. Deviations in behavior, especially more frequent corrections of the driving directions and more frequent brake, are increasing probability of fatigue, or driving under influence, and this information may be fused with video and radar based sensing information in said co-shared processor 12. This enable enhance probability of event detection: fatigue, driving under influence on one side, but also provide driver behavior pattern, which may be commercially sold to the insurance companies. Said HW apparatus 100 can advantageously contain temperature sensor, realized by plurality of technologies, which enable information about temperature in said vehicle 1 cabin. This information can be combined with radar and camera sensing data, being calculated in said co-shared processor 12. Inside cabin temperature information can be correlated with driver vital signs data, driver drowsiness, driver fatigue and driver emotion status, and can be used for the definition and recognition of the specific events in the cabin, which the vehicle 1 can use to initialize specific sets of actions, including as one of an action changing temperature in the cabin, by cooling or heating from one temperature to other predefined value. Said HW apparatus 100 can advantageously contain gas sensor, realized by plurality of technologies, which enable information about specific gas concentration in the cabin, where advantageous carbon dioxide concentration is measured. Said specific gas concentration information can be correlated with driver vital signs data, driver drowsiness, driver fatigue and driver emotion status, and can be used for the definition and recognition of the specific events in the cabin, which a said vehicle 1 can use to initialize specific sets of actions, including as one of an action opening the windows in the cabin, or injection of oxygen in cabin.

Further aspects and examples are found in the following numbered clauses:
1. System providing inside cabin vehicle sensing, comprising of:
   single HW apparatus part having a radar sensor and camera sensor
   wherein said single HW system is positioned in a vertical plane, with an inclination angle larger than 1 degree, observing the area from a higher position than the passenger height seating in the vehicle on a seat, wherein the said higher position, being measured from the inside cabin bottom of the vehicle, is larger than 1m.
   wherein the radar sensor HW portion of the said HW apparatus of said proposed system illuminates the vehicle cabin, and has a processor unit, able to calculate child presence detection inside a vehicle cabin, without any need for sensor processing power on an external processing unit in the said vehicle, providing said event calculation for intrusion and for child presence detection over standard low-speed vehicle digital interface, having less than 10Mbit/s throughput
   wherein the radar sensor HW portion of the said HW apparatus of said proposed system illuminates the vehicle cabin, and has a processor unit, able to calculate the intrusion alert inside a vehicle cabin, without any need for sensor processing power on an external processing unit in a said vehicle, providing said event calculation for intrusion and for child presence detection over said standard low-speed vehicle digital interface, having less than 10Mbit/s throughput
   wherein the camera sensor HW portion of the said HW apparatus of said proposed system acquires video information from an inside vehicle area and provides digital information over the said HV digital high-speed interface, where a high-speed interface is defined as an interface having more than 10Mbit/s throughput
   wherein HW apparatus of the said proposed system has said high-speed interface and said low-speed interface, being connected to the said vehicle infrastructure
   wherein said proposed system has access through said vehicle infrastructure over said high-speed and low-speed interfaces, to a co-shared processing unit being placed in said vehicle
   wherein said co-shared processing unit is processing video signal data, from said camera HW portion of the said HW apparatus, providing event calculation for driver distraction, being defined as a detection of the direction of the eye viewing, if the said direction is toward driving direction or if the said direction is not toward driving direction
   wherein said co-shared processing unit is processing video signal data, from said camera HW portion of the said HW apparatus, providing event calculation for driver's eye closure, wherein the duration of eye closure and frequency of eye closure is monitored, and processed to define the event of driver fatigue and drowsiness
   wherein said co-shared processing unit is processing radar signal data, from said radar HW portion of the said HW apparatus, providing event calculation for seat occupancy of the said vehicle, where the occupancy is related to a human
   where said processing on the said co-shared processor unit is executed using artificial intelligence processing methodologies.
2. System according to clause 1,
   wherein said co-shared processing unit is processing radar signal data, from said radar HW portion of the said HW apparatus, providing event calculation for classification of the human on the seat, detecting between adults and children.
3. System according to clause 1,
   wherein radar signal data is processed directly on said HW apparatus, providing event calculation for classification of the human on the seat, detecting between adults and children.
4. System according to clause 1,
   wherein said co-shared processing unit is processing video signal data, from said radar HW portion of the said HW apparatus, providing event calculation for classification of the human on the seat, detecting between adults and children.
5. System according to clause 1,
   wherein said co-shared processing unit is processing radar signal and video data, from said radar HW portion and video HW portion of the said HW apparatus, providing event calculation for classification of the human on the seat, detecting between adults and children, using sensor fusion.
6. System according to any one of previous clauses,
   wherein said co-shared processing unit is processing radar signal and video data, from said radar HW portion and video HW portion of the said HW apparatus, providing event calculation for initialization of airbag suppression.
7. System according to any one of clause 1 to 5,
   wherein said co-shared processing unit is processing radar signal and video data, from said radar HW portion and video HW portion of the said HW apparatus, providing event calculation for initialization of airbag activation speed.
8. System according to any one of previous clauses,
   wherein said co-shared processing unit is processing radar signal and video data, from said radar HW portion and video HW portion of the said HW apparatus, providing event calculation for initialization of airbag suppression and airbag activation speed, wherein pressure sensors in the back vehicle seats are omitted.
9. System according to any one of previous clauses,
   wherein said co-shared processing unit is processing radar video data, from said video HW portion of the said HW apparatus, providing face recognition of the driver.
10. System according to any one of previous clauses,
   wherein said co-shared processing unit is processing radar signal and video data, from said radar HW portion and said video HW portion of the said HW apparatus, providing driver vital sign detection.
11. System according to any one of previous clauses,
   wherein said co-shared processing unit is processing data, from said HW apparatus, providing event detection of driver usage of the mobile phone by driver's hand.
12. System according to previous clauses
   wherein said co-shared processing unit is processing data, from said HW apparatus, providing event detection of driver emotion sensing.
13. System according to any one of previous clauses,
   wherein said co-shared processing unit is processing data, from said HW apparatus, providing event detection of the passenger gesture, by assessing motion dynamics, motion duration, distances of the object to the said apparatus, and angle of the gesture object to the said HW apparatus of the said proposed system, where said object is a human hand.
14. System according to any one of previous clauses,
   wherein said co-shared processing unit is processing data, from said HW apparatus, providing event detection of the passenger gesture, by assessing motion dynamics, motion duration, distances of the object to the said apparatus, and angle of the gesture object to the said HW apparatus of the said proposed system, where said object is driver's head.
15. System according to any one of previous clauses,
   wherein said co-shared processing unit is processing data, from said video of said HW apparatus, providing event detection of the passenger safety belt usage.
16. System according to any one of previous clauses,
   wherein data from the radar HW portion and video HW portion of said HW apparatus of the proposed systems, are fused in the said HW apparatus and sent to the said co-shared processing unit, using said high-speed interface.
17. System according to any one of previous clauses,
   wherein said high-speed interface is Low Voltage Differential Signaling (LVDS).
18. System according to any one of clauses 1-16,
   wherein said high-speed interface is MIPI CSI-2.
19. System according to any one of previous clauses,
   wherein said low-speed interface is CAN.
20. System according to any one of previous clauses,
   wherein said artificial intelligence processing uses more than one of the algorithmic approaches: Support Vector Machines (SVM) with decision trees, Multilayer Perception (MLP), Convolutional Neural Network (CNN), and Vision Transformer (ViT), being applied to said video data.
21. System according to any one of clauses 1-19,
   wherein said artificial intelligence processing uses more than one of the algorithmic approaches: Support Vector Machines (SVM) with decision trees, Multilayer Perception (MLP), Convolutional Neural Network (CNN), and Vision Transformer (ViT), being applied to said radar data.
22. System according to any one of clauses 1-19,
   wherein said artificial intelligence processing uses more than one of the algorithmic approaches: Support Vector Machines (SVM) with decision trees, Multilayer Perception (MLP), Convolutional Neural Network (CNN), and Vision Transformer (ViT), being applied to the combined said video and said radar data.
23. System according to any one of previous clauses,
   wherein said co-shared processing unit is a processing unit of a vehicle infotainment system.
24. System according to any one of clauses 1-22,
   wherein said co-shared processing unit is a processing unit of a central vehicle autonomous driving processing unit.
25. System according to any one of clauses 1-22,
   wherein said co-shared processing unit is a separate unit dedicated to the said system processor unit, placed in the said vehicle body.
26. System according to any one of previous clauses,
   wherein complete signal processing for all said system applications are executed on said co-shared processing unit.
27. System according to any one of previous clauses,
   wherein said HW apparatus contains at least one wireless connectivity means.
28. System according to any one of clauses 1-26,
   wherein said HW apparatus contains at least one inertial sensor.
29. System according to any one of clauses 1-26,
   wherein said HW apparatus contains at least one temperature sensor.
30. System according to any one of clauses 1-26,
   wherein said HW apparatus contains at least one gas sensor.
31. System according to any one of previous clauses,
   wherein said HW apparatus is positioned on vehicle dash-board height, having arbitrary inclination angle.

## Claims

1. System providing inside cabin vehicle sensing, comprising of:
single HW apparatus part having a radar sensor and camera sensor
wherein said single HW system is positioned in a vertical plane, with an inclination angle larger than 5 degrees, observing the area from a higher position than the passenger height seating in the vehicle on a seat, wherein the said higher position, being measured from the inside cabin bottom of the vehicle, is larger than 1m.
wherein the radar sensor HW portion of the said HW apparatus of said proposed system illuminates the vehicle cabin, and has a processor unit, able to calculate child presence detection inside a vehicle cabin, without any need for sensor processing power on an external processing unit in the said vehicle, providing said event calculation for intrusion and for child presence detection over standard low-speed vehicle digital interface, having less than 10Mbit/s throughput
wherein the radar sensor HW portion of the said HW apparatus of said proposed system illuminates the vehicle cabin, and has a processor unit, able to calculate the intrusion alert inside a vehicle cabin, without any need for sensor processing power on an external processing unit in a said vehicle, providing said event calculation for intrusion and for child presence detection over said standard low-speed vehicle digital interface, having less than 10Mbit/s throughput
wherein the camera sensor HW portion of the said HW apparatus of said proposed system acquires video information from an inside vehicle area and provides digital information over the said HV digital high-speed interface, where a high-speed interface is defined as an interface having more than 10Mbit/s throughput
wherein HW apparatus of the said proposed system has said high-speed interface and said low-speed interface, being connected to the said vehicle infrastructure
wherein said proposed system has access through said vehicle infrastructure over said high-speed and low-speed interfaces, to a co-shared processing unit being placed in said vehicle
wherein said co-shared processing unit is processing video signal data, from said camera HW portion of the said HW apparatus, providing event calculation for driver distraction, being defined as a detection of the direction of the eye viewing, if the said direction is toward driving direction or if the said direction is not toward driving direction
wherein said co-shared processing unit is processing video signal data, from said camera HW portion of the said HW apparatus, providing event calculation for driver's eye closure, wherein the duration of eye closure and frequency of eye closure is monitored, and processed to define the event of driver fatigue and drowsiness
wherein said co-shared processing unit is processing radar signal data, from said radar HW portion of the said HW apparatus, providing event calculation for seat occupancy of the said vehicle, where the occupancy is related to a human
where said processing on the said co-shared processor unit is executed using artificial intelligence processing methodologies.

2. System according to claim 1,
wherein said co-shared processing unit is processing radar signal data, from said radar HW portion of the said HW apparatus, providing event calculation for classification of the human on the seat, detecting between adults and children.

3. System according to claim 1,
wherein radar signal data is processed directly on said HW apparatus, providing event calculation for classification of the human on the seat, detecting between adults and children.

4. System according to claim 1,
wherein said co-shared processing unit is processing video signal data, from said radar HW portion of the said HW apparatus, providing event calculation for classification of the human on the seat, detecting between adults and children.

5. System according to claim 1,
wherein said co-shared processing unit is processing radar signal and video data, from said radar HW portion and video HW portion of the said HW apparatus, providing event calculation for classification of the human on the seat, detecting between adults and children, using sensor fusion.

6. System according to any one of previous claims,
wherein said co-shared processing unit is processing radar signal and video data, from said radar HW portion and video HW portion of the said HW apparatus, providing event calculation for initialization of airbag suppression.

7. System according to any one of claims 1 to 5,
wherein said co-shared processing unit is processing radar signal and video data, from said radar HW portion and video HW portion of the said HW apparatus, providing event calculation for initialization of airbag activation speed.

8. System according to any one of previous claims,
wherein said co-shared processing unit is processing radar signal and video data, from said radar HW portion and video HW portion of the said HW apparatus, providing event calculation for initialization of airbag suppression and airbag activation speed, wherein pressure sensors in the back vehicle seats are omitted.

9. System according to any one of previous claims,
wherein said co-shared processing unit is processing radar video data, from said video HW portion of the said HW apparatus, providing face recognition of the driver.

10. System according to any one of previous claims,
wherein said co-shared processing unit is processing radar signal and video data, from said radar HW portion and said video HW portion of the said HW apparatus, providing driver vital sign detection.

11. System according to any one of previous claims,
wherein said co-shared processing unit is processing data, from said HW apparatus, providing event detection of driver usage of the mobile phone by driver's hand.

12. System according to any one of previous claims,
wherein said co-shared processing unit is processing data, from said HW apparatus, providing event detection of driver emotion sensing.

13. System according to any one of previous claims,
wherein said co-shared processing unit is processing data, from said HW apparatus, providing event detection of the passenger gesture, by assessing motion dynamics, motion duration, distances of the object to the said apparatus, and angle of the gesture object to the said HW apparatus of the said proposed system, where said object is a human hand.

14. System according to any one of previous claims,
wherein said co-shared processing unit is processing data, from said HW apparatus, providing event detection of the passenger gesture, by assessing motion dynamics, motion duration, distances of the object to the said apparatus, and angle of the gesture object to the said HW apparatus of the said proposed system, where said object is driver's head.

15. System according to any one of previous claims,
wherein said co-shared processing unit is processing data, from said video of said HW apparatus, providing event detection of the passenger safety belt usage.

16. System according to any one of previous claims,
wherein data from the radar HW portion and video HW portion of said HW apparatus of the proposed systems, are fused in the said HW apparatus and sent to the said co-shared processing unit, using said high-speed interface.

17. System according to any one of previous claims,
wherein said high-speed interface is Low Voltage Differential Signaling (LVDS).

18. System according to any one of claims 1-16,
wherein said high-speed interface is MIPI CSI-2.

19. System according to any one of previous claims,
wherein said low-speed interface is CAN.

20. System according to any one of previous claims,
wherein said artificial intelligence processing uses more than one of the algorithmic approaches: Support Vector Machines (SVM) with decision trees, Multilayer Perception (MLP), Convolutional Neural Network (CNN), and Vision Transformer (ViT), being applied to said video data.

21. System according to any one of claims 1-19,
wherein said artificial intelligence processing uses more than one of the algorithmic approaches: Support Vector Machines (SVM) with decision trees, Multilayer Perception (MLP), Convolutional Neural Network (CNN), and Vision Transformer (ViT), being applied to said radar data.

22. System according to any one of claims 1-19,
wherein said artificial intelligence processing uses more than one of the algorithmic approaches: Support Vector Machines (SVM) with decision trees, Multilayer Perception (MLP), Convolutional Neural Network (CNN), and Vision Transformer (ViT), being applied to the combined said video and said radar data.

23. System according to any one of previous claims,
wherein said co-shared processing unit is a processing unit of a vehicle infotainment system.

24. System according to any one of claims 1-22,
wherein said co-shared processing unit is a processing unit of a central vehicle autonomous driving processing unit.

25. System according to any one of claims 1-22,
wherein said co-shared processing unit is a separate unit dedicated to the said system processor unit, placed in the said vehicle body

26. System according to any one of previous claims,
wherein complete signal processing for all said system applications are executed on said co-shared processing unit.

27. System according to any one previous claims,
wherein said HW apparatus contains at least one wireless connectivity means.

28. System according to any one of claims1-26 ,
wherein said HW apparatus contains at least one inertial sensor.

29. System according to any one of claims 1-26,
wherein said HW apparatus contains at least one temperature sensor.

30. System according to any one of claims1-26 ,
wherein said HW apparatus contains at least one gas sensor.

31. System according to any one of previous claims,
wherein said HW apparatus is positioned on vehicle dash-board height, having arbitrary inclination angle.
